# EUROPÄISCHE PATENTSCHRIFT

(11) **EP 0 993 477 B1**
(45) Veröffentlichungstag und Bekanntmachung des Hinweises auf die Patenterteilung: **09.10.2002**
(21) Anmeldenummer: 98934974.1
(22) Anmeldetag: 29.06.1998
(51) Int. Cl.: C08F 297/02, C08F 297/04, C08G 81/02, C08L 53/00

(54) **GLYCIDYLETHER ALIPHATISCHER POLYALKOHOLE ALS KOPPLUNGSMITTEL IN DER ANIONISCHEN POLYMERISATION**
GLYCIDYL ETHER ALIPHATIC POLYALCOHOLS AS COUPLING AGENTS IN ANIONIC POLYMERIZATION
GLYCIDYLETHER DE POLYALCOOLS ALIPHATIQUES UTILISE COMME AGENT DE COUPLAGE DANS LA POLYMERISATION ANIONIQUE

(30) Priorität: 30.06.1997 DE 19727770
(43) Veröffentlichungstag der Anmeldung: 19.04.2000
(73) Patentinhaber: BASF AKTIENGESELLSCHAFT, 67056 Ludwigshafen (DE)
(72) Erfinder: KNOLL, Konrad, D-67069 Ludwigshafen (DE); KINDLER, Alois, D-67454 Hassloch (DE); FISCHER, Wolfgang, D-69190 Walldorf (DE)
(86) Internationale Anmeldenummer: EP9803705
(87) Internationale Veröffentlichungsnummer: WO99001490

(56) Entgegenhaltungen:
- EP-A- 0 436 225
- EP-A- 0 512 530
- EP-A- 0 611 787
- US-A- 3 468 972

## Beschreibung

Die Erfindung betrifft ein Verfahren zur Herstellung von Polymeren durch Kopplung von lebenden Polymerblöcken, gebildet aus einem anionischen Polymerisationsinitiator und anionisch polymerisierbaren Monomeren.

Bei der anionischen Polymerisation entstehen in der Wachstumsphase sogenannte "lebende" Polymere (H. Hsieh, R. Quirk, Anionic polymerization, Marcel Dekker, New York 1996).

Es ist bekannt, solche "lebenden" Polymere mit Kopplungsmitteln zu Polymeren höherer Molmasse, Blockcopolymeren oder Sternpolymeren zu verknüpfen. Als Kopplungsmittel wurden eine Vielzahl polyfunktioneller Verbindungen wie polyfunktionelle Siliciumhalogenide, Zinnhalogenide, Alkylhalogenide, Aldehyde, Anhydride, Carbonsäureester oder Diepoxide vorgeschlagen.

Die Verbindungen sind häufig nur unvollständig von protischen Verunreinigungen zu befreien, was zu niedrigen Kopplungsausbeuten führt. Eine niedrigere Kopplungsausbeute beobachtet man insbesondere, wenn polare Lösungsmittel zugegen sind. Aromatische Verbindungen wie Terephthaldialdehyd oder Benzoesäureester neigen zu Vergilbungserscheinungen in den Polymeren. Halogenierte Verbindungen führen zu Halogenidrückständen in den Polymeren, falls keine technisch aufwendige Reinigung erfolgt.

Einige Diepoxide, die durch Epoxidierung von olefinischen Doppelbindungen erhalten werden, stehen unter dem Verdacht, kanzerogen zu sein, was bei ihrer Verwendung zu aufwendigen Sicherheitsmaßnahmen führt. Die EP A 0 643 094 und JP-A 03 285 978 beschreiben die Verwendung von Diglycidylethern von Phenolen wie Bisphenol A oder Bisphenol F als Kopplungsmittel. Solche Diglycidylether enthalten aber in der Regel höhere Oligomere und α-Glykole als Beimengungen. Aufgrund ihrer Schwerflüchtigkeit und leichten Oligomerenbildung bei höheren Temperaturen sind sie nur schwer zu reinigen.

Carbonsäureester liefern zwar gute Kopplungsausbeuten in apolaren Lösungsmitteln, bei Anwesenheit von polaren Lösungsmitteln wie beispielsweise Tetrahydrofuran sind die Kopplungsausbeuten jedoch unbefriedigend. Solche polaren Lösungsmittel werden jedoch häufig bei der anionischen Polymerisation zur Steuerung der Mikrostruktur, der Copolymerisationsparameter oder der Polymerisationsgeschwindigkeit zugesetzt und sind folglich bei der Kopplungsreaktion zugegen.

Die DE A 23 25 365 schlägt daher die Verwendung von Carbonsäureestern vor, die kein an das α-C-Atom gebundenes Wasserstoffatom besitzen. Die vorgeschlagenen aromatischen Carbonsäureester zeigen aber die schon erwähnte Vergilbung.

Aufgabe der vorliegenden Erfindung war es daher, den genannten Nachteilen abzuhelfen, und ein Verfahren zur Kopplung von lebenden anionischen Polymeren mit hoher Kopplungsausbeute insbesondere in Gegenwart polarer Lösungsmittel zur Verfügung zu stellen. Die verwendeten Kopplungsmittel sollten zudem zu keiner Verschlechterung der Polymereigenschaften führen.

Demgemäß wurde ein Verfahren zur Herstellung von Polymeren durch Kopplung von lebenden Polymerblöcken, gebildet aus einem anionischen Polymerisationsinitiator und anionisch polymerisierbaren Monomeren gefunden, wobei man als Kopplungsmittel Glycidylether aliphatischer Polyalkohole verwendet.

Das erfindungsgemäße Verfahren kann prinzipiell auf alle anionisch polymerisierbaren Monomeren angewandt werden. Bevorzugt werden vinylaromatische Monomere und Diene verwendet.

Als vinylaromatische Monomere sind bevorzugt Styrol und dessen in α-Stellung oder am aromatischen Ring mit 1 bis 4 C-Atomen substituierte Derivate, beispielsweise α-Methylstyrol, p-Methylstyrol, Ethylstyrol, tert.-Butylstyrol und Vinyltoluol, weiterhin ist 1,1-Diphenylethylen bevorzugt.

Als Diene eignen sich grundsätzlich alle Diene mit konjugierten Doppelbindungen wie 1,3-Butadien, Isopren, 2,3-Dimethylbutadien, 1,3-Pentadien, 1,3-Hexadiene, Phenylbutadien, Piperylen oder deren Mischungen. Besonders bevorzugt sind Butadien und Isopren.

Die anionische Polymerisation wird mittels metallorganischer Verbindungen initiiert. Als Initiatoren können die üblichen Alkalimetallalkyle oder -aryle eingesetzt werden. Zweckmäßigerweise werden lithiumorganische Verbindungen wie Ethyl-, Propyl-, Isopropyl-, n-Butyl-, sec-Butyl-, tert.-Butyl-, Phenyl-, Hexyldiphenyl-, Hexamethylendi-, Butadienyl-, Isoprenyl-, Polystyryllithium oder 1,1-Diphenylhexyllithium verwendet, das leicht aus der Umsetzung von 1,1-Diphenylethylen mit n- oder sec.-Butyllithium erhältlich ist. Die benötigte Initiatormenge ergibt sich aus dem gewünschten Molekulargewicht der ungekoppelten Polymerblöcke und liegt in der Regel im Bereich von 0,002 bis 5 Molprozent bezogen auf die zu polymerisierende Monomermenge.

Als Lösungsmittel eignen sich gegenüber dem metallorganischen Initiator inerte Lösungsmittel. Zweckmäßigerweise verwendet man aliphatische, cycloaliphatische oder aromatische Kohlenwasserstoffe mit 4 bis 12 Kohlenstoffatomen wie Cyclopentan, Cyclohexan, Methylcyclohexan, Dekalin, Benzol, Alkylbenzole wie Toluol, Xylol oder Ethylbenzol oder geeignete Gemische.

Als ein die Copolymerisationsparameter beeinflussender Zusatz (Randomizer) können beispielsweise Lewisbasen, wie polare, aprotische Lösungsmittel oder kohlenwasserstofflösliche Metallsalze eingesetzt werden. Als Lewisbasen können beispielsweise Dimethylether, Diethylether, Ethylenglykoldimethylether, Diethylenglykoldimethylether, Tetrahydrofuran, Tetrahyrofurfurylether wie Tetrahydrofurfurylmethylether, oder tertiäre Amine wie Pyridin, tertiäre Amine wie Trimethylamin, Triethylamin, Tributylamin oder peralkylierte Bi-oder Oligoamine wie Tetramethylethylendiamin verwendet werden. Diese werden üblicherweise in Konzentrationen von 0,1 bis 5 Volumenprozent bezogen auf das Lösungsmittel eingesetzt. Unter den kohlenwasserstofflöslichen Metallsalzen verwendet man bevorzugt Alkali- oder Erdalkalisalze primärer, sekundärer und bevorzugt tertiärer Alkohole, besonders bevorzugt die Kaliumsalze wie Kaliumtriethylcarbinolat oder Kaliumtetrahydrolinaloolat. Das molare Verhältnis von Metallsalz zu Initiator beträgt gewöhnlich 1 : 200 bis 1 : 5, bevorzugt 1:100 bis 1:20.

Die lebenden Polymerblöcke werden unter Verwendung der genannten Monomeren und Initiatoren nach den üblichen Verfahren der anionischen Polymerisation gebildet. Es können sowohl Homopolymer- oder Copolymerblöcke der genannten Monomeren gebildet werden. Die Copolymerblöcke können statistisch aufgebaut sein oder einen Monomergradienten (sogenannte "tapered blocks") aufweisen. Ebenso können durch sequentielle anionische Polymerisation lebende Blockcopolymere mit ein oder mehr gleichen oder verschiedenen Homo- oder Copolymerblöcken gebildet werden.

Bevorzugt werden lebende Polymerblöcke verwendet, die durch sequentielle anionische Polymerisation eines Blockes A aus vinylaromatischen Monomeren und einem anschließenden Block B aus Dienen hergestellt werden. Diese Blöcke können zu symmetrischen Dreiblockcopolymeren oder Sternpolymeren mit thermoplastisch elastomeren Eigenschaften gekoppelt werden.

Die Blöcke A besitzen vorzugsweise ein Molekulargewicht Mw von im allgemeinen 1000 bis 500000, vorzugsweise 3000 bis 100000, besonders bevorzugt von 4000 bis 30000.

Die Molekulargewichte Mw der Blöcke B liegen im allgemeinen im Bereich von 10000 bis 500000, vorzugsweise von 20000 bis 350000 und besonders bevorzugt von 20000 bis 200000. Die Glastemperaturen der Blöcke B liegen im allgemeinen unter -30°C, bevorzugt unter -50°C.

Die lebenden Polymerblöcke werden durch Zugabe eines Glycidylethers eines aliphatischen Polyalkohols gekoppelt. Bevorzugt verwendet man niedrigviskose Glycidylether kurzkettiger aliphatischer Alkohole, insbesondere von C₂-C₁₃-Alkoholen, die auch als Reaktivverdünner für Epoxidharze eingesetzt werden und keine freien OH- oder NH-Gruppen tragen. Beispiele hierfür sind Ethylenglykol-Diglycidylether, Diethylenglykol-Diglycidylether, Nonaethylenglykol-Diglycidylether, 1,2-Propylenglykol-Diglycidylether, Neopentylglykol-Diglycidylether, 1,4-Butandiol-Diglycidylether, 1,6-Hexandiol-Diglycidylether, 1,2-Bis-(Glycidoxy-Methyl)-Cyclohexan, Bis-(4-Glycidyloxy-Cyclohexyl)-Methan, Glycerin-Triglycidylether, Diglycerin-Triglycidylether, 1,1,1-Trimethylolpropan-Triglycidylether, Pentaerythrit-Tetraglycidylether, Bis-(Diglycerin)-Tetraglycidylether, Tris-(Diglycerin)-Pentaglycidylether. Besonders bevorzugte Kopplungsmittel sind 1,4-Butandioldiglycidylether, Ethylenglycoldiglycidylether und Trimethylolpropantriglycidylether.

Die verwendeten Glycidylether besitzen im allgemeinen eine Reinheit von mindestens 95 %, bevorzugt mindestens 97 % und ganz besonders bevorzugt mindestens 99 %. Die Reinigung von kommerziell erhältlichen Diglycidylethern aliphatischer Polyalkohole technischer Qualität kann beispielsweise durch fraktionierte Destillation im Hochvakuum erfolgen. Die Reinigung erfolgt vorzugsweise durch schonende Verdampfung des Glycidylethers in einem Dünnschichtverdampfer und Destillation des Dampfes in Füllkörperkolonnen bei einem Vakuum von unter 1 mbar, bevorzugt unter 0,1 mbar.

Gewöhnlich richtet sich die Menge des eingesetzten Kopplungsmittels nach der Menge der lebenden Polymerenden, die in der Regel der eingesetzten Initiatormenge entspricht. Üblicherweise wird die stöchiometrische Menge oder ein geringer Überschuß von beispielsweise 10 bis 50 mol-% verwendet.

Das Kopplungsmittel wird zweckmäßigerweise bei Temperaturen im Bereich von 30 bis 70°C zugegeben.

Um eine sehr hohe Kopplungsausbeute zu erreichen, gibt man das Kopplungsmittel langsam zur Lösung der lebenden Polymeren zu. Im erfindungsgemäßen Verfahrens werden die lebenden Polymerblöcke in einer ersten Stufe mit weniger als der stöchiometrischen Menge, vorzugsweise mit 70 bis 90 % der stöchiometrischen Menge des Kopplungsmittels, bezogen auf den eingesetzten anionischen Initiator, versetzt. Nach erfolgter Reaktion wird der zur stöchiometrischen Menge fehlende Rest und gegebenenfalls ein Überschuß des Kopplungsmittels zugegeben.

Falls die durch Kopplung von lebenden Polymerblöcken hergestellten Polymeren auch Dienblöcke enthalten, so kann der Dienblock B nach der Kopplungsreaktion partiell oder vollständig hydriert werden. Durch die Hydrierung von Polyisoprenblöcken gelangt man somit zu Ethylen-Propylen-Blöcken bzw. von Polybutadienblöcken zu Polyethylen- bzw. Polyethylen-Butylen-Blöcken entsprechend dem 1,2-Vinylanteil des unhydrierten Butadienblockes. Durch die Hydrierung werden die Blockcopolymeren thermostabiler und vor allem alterungs- und witterungsbeständiger.

Die Aufarbeitung erfolgt nach den üblichen Methoden der Polymertechnologie, beispielsweise durch Entgasung in Extrudern, Fällen mit polaren Lösungsmitteln wie Alkoholen oder durch Dispergieren in Wasser und Strippen des Lösungsmittels.

Das erfindungsgemäße Verfahren zeichnet sich durch sehr hohe Kopplungsausbeuten, insbesondere auch bei Anwesenheit polarer Verbindungen wie Tetrahydrofuran aus. Es eignet sich daher insbesondere zur Herstellung von symmetrischen Dreiblockcopolymeren und Sternpolymeren, die als thermoplastische Elastomere Verwendung finden.

Die nach dem erfindungsgemäßen Verfahren hergestellten Polymeren können alleine oder in Abmischung mit weiteren Polymeren und mit Zusatzstoffen und Verarbeitungshilfsmitteln in üblichen Mengen zu Formmassen verarbeitet werden. Hierfür kommen z.B. faserund pulverförmige Füll- und Verstärkungsstoffe, Stabilisatoren, Flammschutzmittel, Pigmente, Farbstoffe, Verarbeitungshilfsmittel, wie Gleit- und Entformungsmittel oder Weißöl in Frage.

### Beispiele

### Reinigung von 1,1-Diphenylethylen (DPE)

Kommerziell erhältliches DPE wurde über eine Kolonne mit mindestens 50 theoretischen Böden (Drehbandkolonne; für größere Mengen Kolonne mit Sulzer-Packungen) auf 99,8 % Reinheit aufdestilliert. Das meist schwach gelbe Destillat wird über eine 20 cm Alox-Säule (Woelm-Alumina für die Chromatographie, wasserfrei) filtriert, mit 1,5 n Sec-Butyllithium bis zur kräftigen Rotfärbung titriert und im Vakuum (1 mbar) überdestilliert. Das so erhaltene Produkt ist vollkommen farblos und kann direkt in die anionische Polymerisation eingesetzt werden.

### Reinigung der Monomeren und Lösemittel

Das als Lösemittel eingesetzte Cyclohexan wurde über wasserfreiem Aluminiumoxid getrocknet und mit dem Addukt aus sec-Butyllithium und 1,1-Diphenylethylen bis zur Gelbfärbung austitriert. Das 1,1-Diphenylethylen (DPE) wurde von sec-Butyllithium (s-BuLi) abdestilliert. Als Initiator wurde eine 0,5 molare s-BuLi-Lösung in Cyclohexan verwendet. Styrol (S) und Butadien wurde direkt vor der Verwendung über Aluminiumoxid bei -10°C getrocknet.

### Reinigung von 1,4-Butandioldiglycidylether

475 g technischer 1,4-Butandioldiglycidylether (Grilonit® RV 1806 wurden in einer Destillationsapparatur, bestehend aus einem 2-1-Zweihalsglaskolben, einer mit Raschigringen gefüllten Kolonne von 60 cm und einem Kolonnenkopf "NORMAG 8011 a" bei einem Druck von kleiner 0,1 mbar fraktioniert destilliert. Für die folgenden Beispiele wurden, sofern nicht anders vermerkt, die gemischten Fraktionen verwendet, die bei einer Kolonnenkopftemperatur von 84 bis 87°C überdestilliert sind (siehe Tabelle 1).

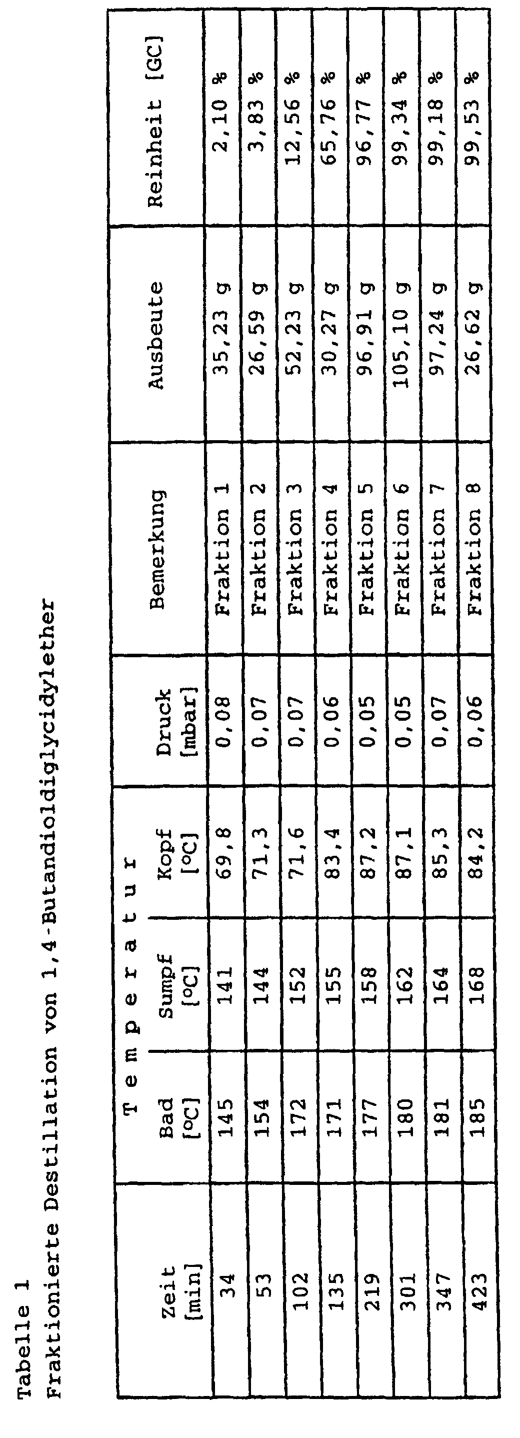

Die Molekulargewichte wurden mittels Gelpermeationschromatographie in THF gegen Polystyrolstandards der Fa. Polymer Laboratories gemessen. Detektion mittels Refraktrometrie.

Als Maß für die Effizienz des Kopplungsschrittes wurde die Kopplungsausbeute aus der GPC-Verteilung (Gelpermeationschromatographie) als Verhältnis von gekoppelten Produkten zur Summe aus gekoppelten Produkten und nicht gekoppelten Polymeren bestimmt.

Die Bestimmung des Doppelbindungsgehaltes erfolgte durch Titration nach Wijs (Iodometrie).

Die mechanischen Eigenschaften wurden temperaturabhängig an Normkleinstäben im Zugversuch nach DIN 53 455 ermittelt.

### Beispiel 1

5439 ml Cyclohexan, das 1 ml 1,1-Diphenylethen als Indikator enthielt, wurde bei 60°C bis zur Gelbfärbung titriert und mit 16,7 ml (25 mmol) s-Butyllithium (1,5 molare Lösung in Cyclohexan) und 14,7 ml Tetrahydrofuran versetzt. 750 g (13,86 mol) 1,3-Butadien wurden auf einmal zugegeben. Bei einem Kesselinnendruck von 12 bar wurde die Reaktionslösung bei einer Temperatur von 45 bis 50°C bis zum Abklingen der Reaktion gehalten. Nach 20 Minuten Nachreaktionszeit wurde der Druck langsam auf 0,3 bar abgesenkt und 1,93 ml (10 mmol) 1,4-Butandioldiglycidylether (98,5 %) tropfenweise bei 50°C zugegeben. 5 Minuten nach beendeter Zugabe wurden weitere 0,48 ml (2,5 mmol) 1,4-Butandioldiglycidylether zugegeben. Die Molmasse Mw betrug 28620 g/mol vor der Kopplung und 55450 g/mol nach der Kopplung. Die Kopplungsausbeute betrug 93,4 %.

### Vergleichsversuche V1 bis V6

Beispiel 1 wurde wiederholt mit dem Unterschied, daß die in Tabelle 2 genannten Kopplungsmittel in stöchiometrischer Menge bei 50°C zugesetzt wurden. Die Kopplungsausbeuten sind ebenfalls in Tabelle 2 zusammengestellt. Die Kopplungsmittel wurden vor der Verwendung von protischen Verunreinigungen befreit und besaßen eine Reinheit von über 98 %.

**Tabelle 2**

| Kopplungsausbeuten verschiedener Kopplungsmittel in Gegenwart von 0,27 Vol.-% Tetrahydrofuran, bezogen auf das Lösungsmittel. | | |
|---|---|---|
| Beispiel | Kopplungsmittel | Kopplungsausbeute [%] |
| Beispiel 1 | 1,4-Butandioldiglycidylether | 93,4 |
| V1 | 1,2-Dibromethan | 78 |
| V2 | Ethylformiat | 19 |
| V3 | Essigsäureethylester | 64 |
| V4 | 1,7-Oktadiendiepoxid | 92,2 |
| V5 | Butadiendiepoxid | 67,6 |
| V6 | 4-Vinyl-1-cyclohexendiepoxid | 50,7 |

### Referenz Beispiel 2

In einem 50-l-Reaktor wurden 1,5 kg Cyclohexan, 1,67 kg 1,1-Diphenylethylen und 300 ml einer 1 molaren s-Butyllithiumlösung in n-Hexan vorgelegt und bei 50°C 14 h gerührt. Anschließend wurde 1,21 kg Styrol mit 1 kg/h zugegeben, wobei die Temperatur auf 50°C gehalten wurde. 30 Minuten nach beendeter Styrolzugabe wurde mit 19,5 kg Cyclohexan verdünnt und auf 40°C abgekühlt. Der erhaltenen S/DPE-Copolymerblock besaß ein Molekulargewicht Mn von 3754 g/mol, M_{w} von 4445 g/mol, Mp von 4676 g/mol, M_{w}/Mₙ = 1,18 und eine Glastemperatur von 152°C. Zu der Polymerlösung wurden 70 ml frisch austitriertes Tetrahydrofuran zugegeben. Anschließend wurden zuerst 2,04 kg Butadien mit 8 kg/h, dann 4,08 kg mit 3 kg/h zudosiert. Nach einer Nachreaktion von 20 Minuten bei 40°C wurde mit 35 ml 1,4-Butandioldiglycidylether versetzt. Das erhaltene Blockcopolymere hatte ein Molekulargewicht M_{w} von 58180 g/mol, die Kopplungsausbeute betrug 88 %. Die Viskositätszahl (0,5 % in Toluol) betrug 55. Der Doppelbindungsgehalt wurde nach Wijs zu 52,4 % ermittelt. Der 1,2-Vinylgehalt betrug 43,2 %.

### Referenz Beispiel 3

In einem 50-l-Reaktor wurden 1,5 kg Cyclohexan, 1,12 kg 1,1-Diphenylethylen und 57,1 ml einer 1 molaren s-Butyllithiumlösung in n-Hexan vorgelegt und bei 50°C 14 h gerührt. Anschließend wurde 0,8 kg Styrol mit 1 kg/h zugegeben, wobei die Temperatur auf 50°C gehalten wurde. 30 Minuten nach beendeter Styrolzugabe wurde mit 22,5 kg Cyclohexan verdünnt und auf 40°C abgekühlt. Der erhaltenen S/DPE-Copolymerblock besaß ein Molekulargewicht Mₙ von 9450 g/mol, M_{w} von 10420 g/mol, Mp von 10220 g/mol, M_{w}/Mₙ = 1,10. Zu der Polymerlösung wurden 70 ml frisch austitriertes Tetrahydrofuran zugegeben. Anschließend wurden zuerst 1,36 kg Butadien mit 8 kg/h, dann 2,72 kg mit 3 kg/h zudosiert. Nach einer Nachreaktion von 20 Minuten bei 50°C wurde mit 8,3 ml 1,4-Butandioldiglycidylether versetzt. Das erhaltene Blockcopolymere hatte ein Molekulargewicht M_{w} von 213500 g/mol, die Kopplungsausbeute betrug 85 %. Die Viskositätszahl (0,5 % in Toluol) betrug 55. Der Doppelbindungsgehalt wurde nach Wijs zu 59,7 % ermittelt. Der 1,2-Vinylgehalt betrug 42,6 %.

### Referenz Beispiel 4

In einem 50-l-Reaktor wurden 24 kg Cyclohexan, 70 ml Tetrahydrofuran, 1,92 kg Styrol und 5 ml 1,1-Diphenylethylen bei 40°C tropfenweise mit 1-molarer s-Butyllithiumlösung in n-Hexan bis zum Auftreten eines gelben Farbtons austitriert und unmittelbar danach mit 36 ml einer 1 molaren s-Butyllithiumlösung in n-Hexan versetzt und bei 70°C 2 h gerührt. Der erhaltene Polystyrolblock besaß ein Molekulargewicht Mw von 29000 g/mol. Anschließend wurden bei 50°C zuerst 4,08 kg Butadien mit 3 kg/h zudosiert. Nach einer Nachreaktion von 20 Minuten bei 50°C wurde mit 7,2 g 1,4-Butandioldiglycidylether versetzt. Das erhaltene Blockcopolymere hatte ein Molekulargewicht Mw von 270000 (gegen Polystyrol-Standard), die Kopplungsausbeute betrug 93 %. Mit Lichtstreuung wurde ein Mw von 182000 ermittelt. Der Doppelbindungsgehalt (eingebautes Butadien) nach Wijs betrug 67,8 %. Der 1,2-Vinylgehalt bezogen auf Gesamtbutadien war 41,3 %.

### Referenz Beispiel 5

In einem 50-l-Reaktor wurden 24 kg Cyclohexan, 70 ml Tetrahydrofuran, 1,74 kg Styrol und 5 ml 1,1-Diphenylethylen bei 40°C tropfenweise mit einer 1 molaren s-Butyllithiumlösung in n-Hexan bis zum Auftreten eines gelben Farbtons austitriert und unmittelbar danach mit 220 ml einer 1 molaren s-Butyllithiumlösung in n-Hexan versetzt und bei 70°C 2 h gerührt. Der erhaltene Styrolblock besaß eine Molekulargewicht M_{w} von 8100 g/mol. Anschließend wurden bei 50°C 4,26 kg Butadien mit 3 kg/h zudosiert. Nach einer Nachreaktion von 20 Minuten bei 50°C wurde mit 22,2 g 1,4-Butandioldiglycidylether (98,5 %) versetzt. DAs erhaltene Blockcopolymere hatte ein Molekulargewicht M_{w} von 77000 (gegen Polystyrol-Standard), die Kopplungsausbeute betrug 95 %. Der Doppelbindungsgehalt (eingebautes Butadien) nach Wijs betrug 70,8 %. Der 1,2-Vinylgehalt, bezogen auf Gesamtbutadien, war 40,5 %.

### Referenz Beispiel 6

Referenz Beispiel 5 wurde wiederholt, mit dem Unterschied, daß der zur Kopplung verwendete 1,4-Butandioldiglycidiylether eine Reinheit von 99,5 % (Fraktion 9) besaß. Die Kopplungsausbeute betrug 97 %.

### Herstellung von hydrierten Dreiblockcopolymeren

### Beispiel 7

### Herstellung des Hydrierkatalysators:

In einem Rundkolben wurden unter Stickstoff 1125 ml einer bei Raumtemperatur gesättigten Nickelacetylacetonat in Toluol (ca. 10 g/l unter Rühren zu einer Lösung von 192,5 ml einer 20 gew.-%igen Lösung von Triisobutylaluminium in n-Hexan zugegeben. Bei der leicht exothermen Reaktion entwich Isobutanol und die Temperatur stieg auf 50°C an.

Die Polymerlösung aus Referenz Beispiel 2 wurde in einem 50-l-Rührreaktor auf 60°C erwärmt und mit einer frisch bereiteten Katalysatorsuspension versetzt. Anschließend wurde bei 120°C und einem Druck von 18 bar mit Wasserstoff hydriert. Nach 25 h wurde ein Restdoppelbindungsgehalt von 22,6 % ermittelt. Nach weiteren 17,5 h wurde die Lösung auf 60°C abgekühlt. Der Doppelbindungsgehalt betrug 18,5 %.

Anschließend wurde die Reaktionslösung oxidativ mit 300 ml einer Mischung aus 3,6 l Wasser, 360 ml einer 30 %igen Wasserstoffperoxidlösung und 200 ml 98 %iger Essigsäure bei 60°C behandelt, der Rückstand mit Wasser gewaschen und getrocknet.

Zur Stabilisierung wurden das hydrierte S/DPE-Bu-S/DPE-Blockcopolymere mit jeweils 0,1 Gew.-% Irganox® 3052 und Kerobit® TBK versetzt.

Die Viskositätszahl (0,5 % in Toluol) betrug 51 ml/g.

Die mechanischen Eigenschaften wurden an Normkleinstäben (ausgestanzt aus Preßplatten) bei 23°C ermittelt. Zugfestigkeit: 25 MPa; Reißdehnung: 1014 %; Shorehärte A: 69.

### Beispiel 8

Die Polymerlösung aus Referenz Beispiel 3 wurde analog Beispiel 7 hydriert. Der Doppelbindungsgehalt betrug 2,6 %; Shorehärte A: 54,7.

### Beispiel 9

Die Polymerlösung aus Referenz Beispiel 4 wurde analog Beispiel 7 hydriert, oxidiert, gewaschen und getrocknet. Der Restdoppelbindungsgehalt nach Wijs betrug 2,2 %; Shorehärte A: 75.

### Beispiel 10

Die Polymerlösung aus Referenz Beispiel 5 wurde analog Beispiel 7 hydriert, oxidiert, gewaschen und getrocknet. Der Restdoppelbindungsgehalt nach Wijs betrug 1,4 %. Der Zugversuch ergab eine Reißdehnung von 550 % bei einer Reißspannung von 35 MPa; Shorehärte A: 74.

## Patentansprüche

1. Verfahren zur Herstellung von Polymeren durch Kopplung von lebenden Polymerblöcken, gebildet aus einem anionischen Polymerisationsinitiator und anionisch polymerisierbaren Monomeren, wobei man als Kopplungsmittel Glycidylether aliphatischer Polyalkohole verwendet, **dadurch gekennzeichnet, daß** man das Kopplungsmittel in mindestens zwei Stufen zugibt, wobei man in einer ersten Stufe weniger als die stöchiometrische Menge des Kopplungsmittels bezogen auf den anionischen Initiator zugibt und abreagieren läßt.

2. Verfahren zur Herstellung von Polymeren nach Anspruch 1, **dadurch gekennzeichnet, daß** man als Glycidylether Ethylenglykoldiglycidylether, 1,4-Butandioldiglycidylether oder Trimethylolpropantriglycidylether verwendet.

3. Verfahren zur Herstellung von Polymeren nach den Ansprüchen 1 oder 2, **dadurch gekennzeichnet, daß** man ein Kopplungsmittel einer Reinheit von über 95 % verwendet.

4. Verfahren nach einem der Ansprüche 1 bis 3, **dadurch gekennzeichnet, daß** man in der ersten Stufe 70 bis 90 % der stöchiometrischen Menge des Kopplungsmittels, bezogen auf den anionischen Initiator, zugibt.

5. Verfahren nach einem der Ansprüche 1 bis 4, **dadurch gekennzeichnet, daß** der zur stöchiometrischen Menge fehlende Rest und ein Überschuß von 10 bis 50 mol-% in der zweiten Stufe zugegeben wird.

6. Verfahren zur Herstellung von Polymeren nach den Ansprüchen 1 bis 5, **dadurch gekennzeichnet, daß** man als anionischen Polymerisationsinitiator eine lithiumorganische Verbindung verwendet.

7. Verfahren zur Herstellung von Polymeren nach den Ansprüchen 1 bis 6, **dadurch gekennzeichnet, daß** man als anionisch polymerisierbare Monomere vinylaromatische Monomere und Diene verwendet.

## Claims

1. A process for preparing polymers by coupling living polymer blocks formed from an anionic polymerization initiator and anionically polymerizable monomers, in which glycidyl ethers of aliphatic polyalcohols are used as coupling agents, which comprises adding the coupling agent in at least two stages, adding less than the stoichiometric amount of coupling agent based on the anionic initiator in the first stage and allowing the reaction to proceed.

2. A process for preparing polymers as claimed in claim 1, wherein the glycidyl ether used is ethylene glycol diglycidyl ether, 1,4-butanediol diglycidyl ether or trimethylolpropane triglycidyl ether.

3. A process for preparing polymers as claimed in claim 1 or 2, wherein the coupling agent used has a purity of more than 95%.

4. A process as claimed in any of claims 1 to 3, wherein from 70 to 90% of the stoichiometric amount of the coupling agent based on the anionic initiator is added in the first stage.

5. A process as claimed in any of claims 1 to 4, wherein the remainder of the stoichiometric amount and an excess of from 10 to 50 mole% is added in the second stage.

6. A process for preparing polymers as claimed in any of claims 1 to 5, wherein the anionic polymerization initiator used is an organolithium compound.

7. A process for preparing polymers as claimed in any of claims 1 to 6, wherein the anionically polymerizable monomers used are vinylaromatic monomers and dienes.

## Revendications

1. Procédé de préparation de polymères par couplage de blocs polymériques vivants, formés d'un amorceur de polymérisation anionique et de monomères polymérisables par voie anionique, dans lequel on utilise, comme agent de couplage, de l'éther glycidylique de polyols aliphatiques, **caractérisé en ce qu'**on ajoute l'agent de couplage en au moins deux étapes, où on ajoute et laisse réagir dans une première étape une quantité de l'agent de couplage inférieure à la quantité stoechiométrique, par rapport à l'amorceur anionique.

2. Procédé de préparation de polymères suivant la revendication 1, **caractérisé en ce que**, comme éther glycidylique, on utilise de l'éther diglycidylique d'éthylèneglycol, de l'éther diglycidylique de 1,4-butanediol ou de l'éther triglycidylique de triméthylolpropane.

3. Procédé de préparation de polymères suivant l'une des revendications 1 et 2, **caractérisé en ce qu'**on utilise un agent de couplage d'une pureté supérieure à 95 %.

4. Procédé suivant une des revendications 1 à 3, **caractérisé en ce que**, dans la première étape, on ajoute 70 à 90 % de la quantité stoechiométrique de l'agent de couplage, par rapport à l'amorceur anionique.

5. Procédé suivant l'une des revendications 1 à 4, **caractérisé en ce que** le reste manquant pour atteindre la quantité stoechiométrique et un excès de 10 à 50 moles % sont ajoutés dans la deuxième étape.

6. Procédé de préparation de polymères suivant l'une des revendications 1 à 5, **caractérisé en ce que**, comme amorceur de polymérisation anionique, on utilise un composé organique de lithium.

7. Procédé de préparation de polymères suivant l'une des revendications 1 à 6, **caractérisé en ce que**, comme monomères polymérisables par voie anionique, on utilise des diènes et des monomères vinylaromatiques.
